# EUROPÄISCHE PATENTSCHRIFT

(11) **EP 2 173 600 B1**
(45) Veröffentlichungstag und Bekanntmachung des Hinweises auf die Patenterteilung: **25.10.2017**
(21) Anmeldenummer: 08759060.0
(22) Anmeldetag: 06.06.2008
(51) Int. Cl.: B62D 21/11

(54) **HILFSRAHMEN IM FAHRWERKSBEREICH EINES ZWEISPURIGEN FAHRZEUGS**
AUXILIARY FRAME IN THE CHASSIS REGION OF A TWO-TRACK VEHICLE
CHÂSSIS AUXILIAIRE PROCHE DU TRAIN DE ROULEMENT D'UN VÉHICULE À DEUX LIGNES

(30) Priorität: 28.07.2007 DE 102007035510
(43) Veröffentlichungstag der Anmeldung: 14.04.2010
(73) Patentinhaber: Bayerische Motoren Werke Aktiengesellschaft, 80809 München (DE)
(72) Erfinder: GLASL, Walter, 85049 Ingolstadt (DE); EPPELEIN, Ralph, 85375 Neufahrn (DE); BERGMAIER, Stefan, 84130 Dingolfing (DE)
(86) Internationale Anmeldenummer: PCT/EP2008/004515
(87) Internationale Veröffentlichungsnummer: WO 2009/015722

(56) Entgegenhaltungen:
- EP-A- 1 787 894
- DE-A1-102005 038 182
- DE-A1-102006 013 548
- DE-B3-102007 002 609

## Beschreibung

Die Erfindung betrifft einen Hilfsrahmen im Fahrwerksbereich eines zweispurigen Fahrzeugs, mit zwei voneinander beabstandeten Längsträgern, zumindest einem diese verbindenden Querträger sowie zwei sich in Aufsicht auf die Fahrbahn kreuzenden und im Kreuzungspunkt miteinander verbundenen, strebenartigen Stabilisierungselementen, die jeweils zwischen den beiden Längsträgern abgestützt sind. Zum technischen Umfeld wird neben der DE 198 10 123 A1 auf die DE 10 2005 038 182 A1 oder die DE 28 41 796 und insbesondere auf die EP 1 787 894 A2 verwiesen.

Ein derartiger Hilfsrahmen kann bspw. bzw. vorzugsweise als sog. Vorderachsträger eines Kraftfahrzeugs zum Einsatz kommen. Solche Vorderachsträger sollen auch hinsichtlich eines Fahrzeug-Crashs gute Eigenschaften, d.h. insbesondere eine ausreichende Steifigkeit aufweisen. Im Hinblick ist hierauf ist in der erstgenannten DE 198 10 123 A1 ein Hilfsrahmen mit einem sog. Schubfeld offenbart, welches eine flächige Struktur darstellt, die zwischen den Längsträgern und dem Querträger eingefügt ist. Ein derartiges flächiges Schubfeld kann im wesentlichen Zugkräfte und Scherkräfte übertragen. Druckkräfte hingegen können zwischen den beiden Längsträgern besser übertragen werden, wenn anstelle eines sog. Schubfeldes strebenartige sog. Stabilisierungselemente zwischen den Längsträgern angebracht bzw. abgestützt sind, vorzugsweise in Form eines sog. Strebenkreuzes, so wie dies in jeder der oben weiterhin genannten Schriften (DE 10 2005 038 182 A1 oder DE 28 41 796 oder EP 1 787 894 A2) gezeigt ist.

Gegenüber diesem letztgenannten Stand der Technik sind Verbesserungen hinsichtlich Gewicht und Fertigungstechnologie möglich, die aufzuzeigen sich die vorliegende Erfindung zur Aufgabe gestellt hat.

Die Lösung dieser Aufgabe ist für einen Hilfsrahmen nach dem Oberbegriff des Anspruchs 1 dadurch gekennzeichnet, dass die beiden Stabilisierungselemente inclusive deren den Kreuzungspunkt umgebenden sog. Verbindungsbereich durch einen einzigen geschlossenen Hohlkörper gebildet sind, der durch zwei in einer zur Fahrbahn parallelen Ebene in kraftübertragender Weise miteinander verbundene schalenförmige Strukturen gebildet ist, nämlicher einer konvexen Oberschale und einer konkaven Unterschale, die jeweils vier vom Verbindungsbereich abragende Arme aufweisen, die zwei sich kreuzende Diagonalen beschreiben, längs derer im zusammengesetzten Zustand die Stabilisierungselemente gebildet sind..

Zur näheren Erläuterung wird auf die beigefügten Figuren 1 - 4 verwiesen, die auf das wesentliche vereinfacht ein bevorzugtes Ausführungsbeispiel zeigen. Dabei ist in Figur 1 die (räumliche) Ansicht eines erfindungsgemäßen Hilfsrahmens mit montiertem Hohlkörper, welcher die Stabilisierungselemente sowie deren Verbindungsbereich bildet, gezeigt, während in Figur 2 der Hohlkörper alleine und und in Fig.3 die sog. Oberschale sowie in Figur 4 die sog. Unterschale, aus denen dieser Hohlkörper zusammengesetzt ist, in vergleichbarer Ansicht schräg von oben zur Fahrbahn hin dargestellt sind.

Zwei voneinander beabstandete Längsträger 1 sowie ein diese miteinander verbindender Querträger 2 bilden einen als sog. Vorderachsträger fungierenden Hilfsrahmen eines Kraftfahrzeugs, wobei zwischen den beiden Längsträgern 1 zwei sich in Aufsicht auf die Fahrbahn kreuzende und in einem Kreuzungspunkt miteinander verbundene, strebenartigen Stabilisierungselemente abgestützt und hierzu mit ihren Enden am jeweils zugewandten Längsträger 1 vorzugsweise lösbar befestigt sind. Diese strebenartigen Stabilisierungselemente stellen gemäß vorliegender Erfindung keine eigenständigen Bauteile dar und sind daher zur Differenzierung gegenüber solchen mit den Buchstaben A, B gekennzeichnet, während der Buchstabe "X" auf deren "fiktiven" Kreuzungspunkt hinweist.

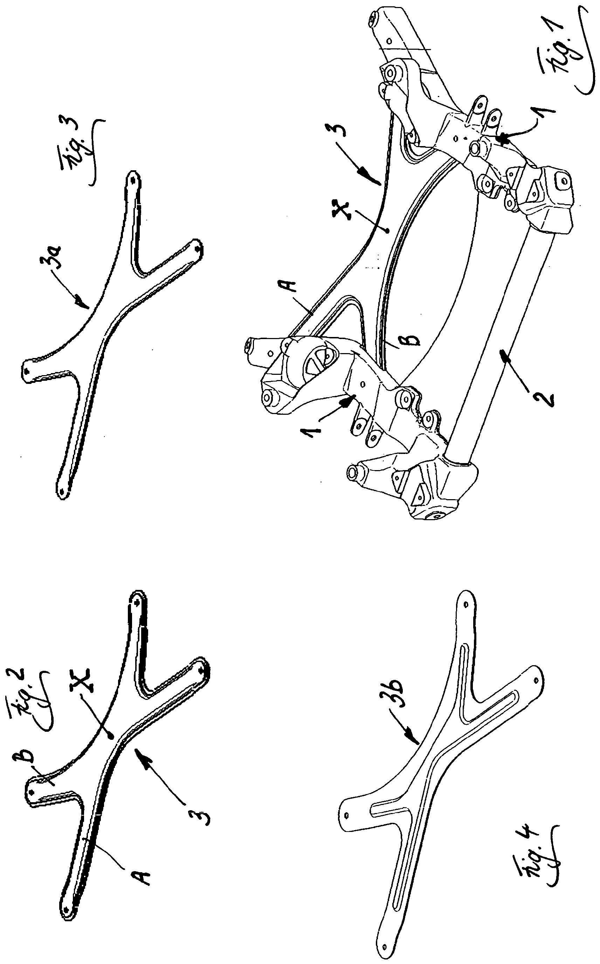

Tatsächlich sind die beiden Stabilisierungselemente A, B inclusive deren Verbindungsbereich (= Umgebung des Kreuzungspunktes X) durch einen einzigen Hohlkörper 3 gebildet, der durch zwei im wesentlichen in einer zur Fahrbahn parallelen Ebene in kraftübertragender Weise miteinander verbundene schalenförmige Strukturen 3a, 3b gebildet ist. Jede dieser schalenförmigen Strukturen 3a, 3b weist - in Aufsicht auf die Fahrbahn - die Grundstruktur eines bspw. in der bereits genannten DE 10 2005 038 182 A1 oder in Figur 2 der bereits genannten DE 28 41 796 gezeigten sog. Strebenkreuzes auf, also vier von einem sog. Verbindungsbereich (= Umgebung des Kreuzungspunktes X) abragende Arme, die zwei sich kreuzende Diagonalen bezüglich dieses Verbindungsbereichs bilden und sich dabei über diesen Verbindungsbereich hinaus erstrecken, wobei diese beiden genannten Diagonalen die bereits genannten strebenartigen Stabilisierungselemente A, B bilden.

Die in Figur 3 dargestellte schalenförmige Struktur 3a fungiert als sog. Oberschale des Hohlkörpers 3, während die in Figur 4 dargestellte schalenförmige Struktur 3b dessen sog. Unterschale ist. Die Oberschale 3a (vgl. Fig.3) sei zum Betrachter hin gewölbt und stellt somit einen konvexen räumlichen Körper dar, während die Unterschale 3b (vgl. Fig.4) vom Betrachter weg gewölbt ist und somit einen konkaven räumlichen Körper darstellt. Wie in den Figuren 3, 4 dargestellt sind nun die beiden schalenförmigen Strukturen 3a, 3b aneinander bzw. sich überdeckend übereinander gefügt, um den (bzw. einen geschlossenen) Hohlkörper 3 zu bilden. Dieses Zusammenfügen in einer zur Fahrbahn im wesentlichen parallelen Ebene erfolgt derart, dass eine Kraftübertragung zwischen den beiden schalenförmigen Strukturen 3a, 3b möglich ist, vorzugsweise durch Verschweißen der beiden schalenförmigen Strukturen 3a, 3b, die ihrerseits durch Tiefziehen aus einem StahlBlech hergestellte Teile sind.

Die so gebildete Hohlkörper 3 ist einerseits in der Lage, relativ hohe Druckkräfte in Richtung der genannten Diagonalen bzw. Stabilisierungselemente A, B zwischen den beiden Längsträgern 1 zu übertragen, und zwar vorteilhafterweise bei relativ geringem Gewicht. Ferner ist dieser Hohlkörper 3 relativ einfach zu fertigen und lässt sich als vorgefertigtes Bauteil einfach und schnell an den Längsträgern 1 befestigen, vorzugsweise über Schraubverbindungen, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Hilfsrahmen im Fahrwerksbereich eines zweispurigen Fahrzeugs, mit zwei voneinander beabstandeten Längsträgern (1), zumindest einem diese verbindenden Querträger (2) sowie zwei sich in Aufsicht auf die Fahrbahn kreuzenden und im Kreuzungspunkt (X) miteinander verbundenen, strebenartigen Stabilisierungselementen (A, B), die jeweils zwischen den beiden Längsträgern (1) abgestützt sind,
**dadurch gekennzeichnet, dass** die beiden Stabilisierungselemente (A, B) inklusive deren den Kreuzungspunkt (X) umgebenden sog. Verbindungsbereich durch einen einzigen geschlossenen Hohlkörper (3) gebildet sind, der durch zwei in einer zur Fahrbahn parallelen Ebene in kraftübertragender Weise miteinander verbundene schalenförmige Strukturen (3a, 3b) gebildet ist, nämlich einer konvexen Oberschale (3a) und einer konkaven Unterschale (3b), die jeweils vier vom Verbindungsbereich abragende Arme aufweisen, die zwei sich kreuzende Diagonalen beschreiben, längs derer im zusammengesetzten Zustand die Stabilisierungselemente (A, B) gebildet sind.

2. Hilfsrahmen nach Anspruch 1,
**dadurch gekennzeichnet, dass** die schalenförmigen Strukturen (3a, 3b) Blech-Tiefziehteile sind, die zur Bildung des Hohlkörpers (3) miteinander verschweißt sind.

## Claims

1. An auxiliary frame in the chassis region of a two-track vehicle, with two longitudinal members (1) which are spaced apart from each other, at least one crossmember (2) which connects said two longitudinal members, and two strut-like stabilisation elements (A, B), which, in plan view of the carriageway, intersect and are connected to each other at the intersecting point (X) and are each supported between the two longitudinal members (1),
**characterised in that** the two stabilisation elements (A, B), including what is known as the connection region thereof surrounding the intersecting point (X), are formed by a single closed hollow body (3) which is formed by two shell-like structures (3a, 3b) connected to one another in a force-transmitting manner in a plane parallel to the carriageway, more especially
a convex upper shell (3a) and a concave lower shell (3b), which each have four arms protruding from the connection region, which arms describe two intersecting diagonals along which the stabilisation elements (A, B) are formed in the assembled state.

2. An auxiliary frame according to claim 1,
**characterised in that** the shell-like structures (3a, 3b) are sheet-metal deep-drawn parts which are welded to each other in order to form the hollow body (3).

## Revendications

1. Châssis auxiliaire situé dans la zone du train de roulement d'un véhicule à deux voies, comprenant deux longerons (1) situés à distance l'un de l'autre, au moins une traverse (2) reliant ces longerons ainsi que deux éléments de stabilisation (A, B) de type entretoises se croisant en vue en plan sur la voie de déplacement et reliés au niveau du point d'intersection (X), qui s'appuient respectivement entre deux longerons (1),
**caractérisé en ce que**
les deux éléments de stabilisation (A, B), y compris leur zone de liaison entourant le point d'intersection (X) sont formés par un corps creux fermé unique (3) qui est formé par deux structures (3a, 3b) en forme de coquille reliées de façon à transmettre les forces dans un plan parallèle à la voie de déplacement, à savoir une coquille supérieure convexe (3a) et une coquille inférieure concave (3b) qui comportent chacune quatre bras s'étendant à partir de la zone de liaison et décrivent deux diagonales qui se croisent le long desquelles, à l'état assemblé, sont formés les éléments de stabilisation (A, B).

2. Châssis auxiliaire conforme à la revendication 1,
**caractérisé en ce que**
les structures en forme de coquille (3a, 3b) sont des éléments en tôle obtenus par emboutissage profond qui sont soudés pour permettre de former le corps creux (3).
